# NEW EUROPEAN PATENT SPECIFICATION

(11) **EP 3 603 407 B2**
(45) Date of publication and mention of the opposition decision: **27.11.2024**
(45) Mention of the grant of the patent: 19.05.2021
(21) Application number: 19188612.6
(22) Date of filing: 26.07.2019
(51) Int. Cl.: A23C 20/00

(54) **METHOD FOR THE PRODUCTION OF A VEGETABLE DERIVED CHEESE SUBSTITUTE FOOD PRODUCT**
VERFAHREN ZUR HERSTELLUNG EINES PFLANZLICHEN KÄSEERSATZ-LEBENSMITTELPRODUKT
PROCÉDÉ DE PRODUCTION D'UN PRODUIT ALIMENTAIRE DE SUBSTITUTION DU FROMAGE D'ORIGINE VÉGÉTALE

(30) Priority: 30.07.2018 IT 201800007606
(43) Date of publication of application: 05.02.2020
(73) Proprietor: Hochland SE, 88178 Heimenkirch / Allgäu (DE)
(72) Inventor: Bego, Roberto Andrea, 28876 Macugnaga (VB) (IT); Barbieri, Serena, 20144 Milano (IT)
(74) Representative: Patent- und Rechtsanwälte Behrmann Wagner PartG mbB

(56) References cited:
- EP-A1- 2 731 451
- EP-A1- 2 943 077
- EP-A2- 1 119 262
- WO-A1-91/17663
- WO-A1-98/42200
- DE-A1- 102007 061 256
- FR-A1- 2 738 991
- JP-A- 2009 136 158
- US-B1- 6 495 187
- PAGNANI MICHAELA: "Fermentino", ZUBEREITUNGEN UND REZEPTE VON DANIELA CICIONI, 1 June 2018 (2018-06-01), pages 1 - 9

## Description

### Field of Application

The present invention relates to the field of the food industry. In particular, the invention refers to a vegetable-derived food product substitute for cheese, or an alternative to it, and to a process for the production thereof.

### Prior art

As it is known, one of the most worldwide consumed food is milk, in particular cow milk, and the cheeses derived therefrom, as well as the various food products containing milk or cheese, are likewise extensively consumed.

It is also known that there is an increasing percentage of lactose-intolerant subjects, who lack or have a reduced amount of the enzymes responsible for lactose digestion , i.e. the most abundant sugar in milk and derivatives thereof. In these individuals, the enteric bacteria ferment lactose, thus causing various abdominal symptoms, which can include abdominal pain, swelling, flatulence, diarrhea, nausea and acid reflux.

It is also well known that cheese contains saturated fatty acids and cholesterol, whose concentration is particularly high in the so called "fat cheeses" and, in general, in ripened cheeses. High consumption of said food products can be one of the causes of diseases, such as for example hypercholesterolemia, which entails deposition of excess cholesterol onto the artery walls, thus causing progressive thickening and hardening (arteriosclerosis), until the formation of actual plaques (or atheromas) which hinder the bloodstream. Consequently, people already having high blood cholesterol levels are strongly advised against large consumption of fat and/or ripened cheeses.

It is further known the increase of the number of people who decide not to consume milk and cheeses because of ethical reasons, such as the high consumption of environmental resources related to the production of said food and the treatment suffered by animals in intensive farming.

Recently, food industry field specific for the production of cheese replacements, i.e. non-dairy milk cheese replicas, has been developed. ,

Cheese replacement food products mainly made of non-dairy ingredients, such as vegetable seed milk, are known. It is also known that, often, said products contain starch, agar, carrageenan or tofu, as a gelling agent, to provide the desired texture.

However, the currently available starches increase the carbohydrate contents of the cheese replacement products, which could be not appreciated by the consumers, for example those who desire to limit carbohydrate consumption. Moreover, complex carbohydrates in the currently available seed milk cheese replicas have adverse effects on the texture, providing a product having a granular texture without the creaminess of the dairy cheeses.

Other known cheese replacements contain enzymatic additives, such as e.g. transglutaminase.

Patent application EP2943077 describes a non-dairy ricotta replica comprising nut milk (a mixture of almond milk and macadamia nut milk), transglutaminase and lactic ferments *Lactococcus lactis lactis* and *Lactococcus lactis cremoris.* In the process for the production of the product, transglutaminase acts as thickening agent of the fermented milk curd, promoting cross-linking of milk proteins, in order to facilitate the separation of the fermented milk curd from the whey (waste product).

Currently, there are no cheese replacement products free of thickening, gelling or rheology-modifying additives, due to the difficult handling of the raw material, i.e. seed milk, which has chemical-organoleptic characteristics different from those of the known dairy milk.

Therefore, the problem underlying the present invention is to provide a food product substitute of cheese, or alternative to it, being free of gelling, thickening or rheology-modifying agents and able to adequately imitate the outer and inner appearance, aroma and texture of dairy cheeses.

### Summary of the Invention

Said problem was solved, according to the invention, by providing a process for the production of a cheese replacement food product of vegetable origin, comprising the steps of:
a) producing a non-dairy milk from at least one oleaginous seed;
b) carrying out a fermentation for 20-36 hours, preferably 22-30 hours, at a temperature between 22°C and 31 °C, until a pH between 4.0 and 5.0, preferably between 4.4 and 4.6, is reached, by adding at least one lactic ferment and optionally another microorganism selected from the group comprising *Penicillium Candidum, Geotrichum candidum, Saccharomyces cerevisiae* and *Penicillum roqueforti* to said non-dairy milk, thus obtaining a curd and a whey;
c) separating curd from whey;
d) performing a first draining of the curd;
e) performing a second draining of the curd, optionally applying a predetermined pressure on it, thus obtaining a drained curd;
f) drying the drained curd for at least 2 days, preferably 2-4 days at a temperature between 6°C and 12°C, preferably 8-10°C, in the presence of a relative humidity between 75% and 80%, obtaining a dry semi-finished product;
g) maturing the dry semi-finished product, in the presence of a relative humidity between 75% and 90%.

The term "curd" means the acid coagulum obtained by fermentation of non-dairy milk due to the increase of milk acidity, produced by the metabolism of the above ferments.

The term "whey", as used above, means the liquid which separates from the curd, as defined above, following the fermentation step.

The term "dry", referred to the semi-finished product obtained in step f), means a semi-finished product having a humidity content between 50% and 80%.

In one aspect of the invention, the step a) of producing a non-dairy milk from at least one oleaginous seed comprises the following steps: preparing a 14-30% w/w aqueous dispersion of ground oleaginous seeds selected from the group consisting of almond, pistachio, hazelnut, sunflower seeds or mixtures thereof; pasteurizing the dispersion at a temperature between 55-78°C for a time period of 5-20 minutes, obtaining said non-dairy milk.

Alternatively, the step a) of producing a non-dairy milk from at least one oleaginous seed comprises the following steps: preparing a 14-30% w/w, preferably 15-20% w/w, aqueous dispersion of ground oleaginous seeds selected from the group consisting of almond, pistachio, hazelnut, sunflower seeds or mixtures thereof; subjecting the dispersion to filtration or centrifugation, obtaining a liquid phase and a solid phase; pasteurizing said liquid phase at a temperature between 55-78°C for a time period of 5-20 minutes, obtaining said non-dairy milk.

Preferably, the at least one lactic ferment of said step b) consists of *Streptococcus Lactis subsp. Diacetylactis.*

Preferably, the first draining is carried out at a temperature between 2°C and 5°C for a time period between 24-36 hours.

In an embodiment of the invention, the second draining is carried out at a temperature between 2°C and 4°C for a time period between 24-48 hours; the maturing step occurs for 6-8 days at a temperature between 9°C and 10°C.

In another embodiment of the invention, said at least one lactic ferment of said step b) consists of two or more lactic ferments selected from the group consisting of *Streptococcus Lactis subsp. Diacetylactis, Lactobacillus rhamnosus* and *Lactobacillus plantarum.*

According to said embodiment, the first draining is carried out at a temperature between 2°C and 5°C for a time period between 24-36 hours, the second draining is carried out at a temperature between 2°C and 4°C for a time period between 24-48 hours; the maturing step occurs for 15-20 days at a temperature between 9°C and 10°C.

In a further embodiment of the invention, the second draining is carried out at a temperature between 18°C and 22°C for a time period between 8-10 hours, after incorporating into the curd obtained from the first draining an amount of said whey between 1% and 5% by weight of the curd weight; the maturing step occurs for 50-60 days at a temperature between 3°C and 5°C, the process further comprising a step of piercing said dry semi-finished product before the maturing step.

In another embodiment of the invention, the first draining is carried out at a temperature between 2°C and 3°C; the second draining is carried out at a temperature between 18°C and 22°C for a time period between 8-10 hours, after incorporating into the curd obtained from the first draining an amount of said whey between 1% and 5% by weight of the curd weight; the maturing step occurs for 50-60 days at a temperature between 3°C and 5°C, the process further comprising a step of coating the outer surface of said dry semi-finished product with powdered vegetable charcoal and a subsequent step of piercing said dry semi-finished product, before the maturing step.

In a further embodiment of the invention, the second draining is carried out at a temperature between 2°C and 3°C for a time period between 24-36 hours, applying a pressure of between 940-1300 Pa onto the curd for 12 hours; the maturing step occurs for 4-6 months at a temperature between 2°C and 3°C.

Preferably, the above-mentioned embodiment of the invention comprises a step of adding turmeric and/or saffron in said step a) of producing the non-dairy milk.

In some embodiments, the process according to the present invention comprises, after step g), a step h) of bringing and maintaining said mature semi-finished product at a temperature between 2°C and 5°C, preferably at 2-3°C, for a period of 1-2 days at a relative humidity between 85% and 90%.

The present invention further describes a cheese replacement food product of vegetable origin comprising fats, proteins and carbohydrates obtained from at least one oleaginous seed selected from the group consisting of almonds, pistachio nuts, hazelnuts and sunflower, characterized in that it is free of chemical and enzymatic additives, and in that it is obtainable by the above described process.

Preferably, the food product is characterized in that it is free of transglutaminase.

Preferably, the food product comprises at least one lactic ferment and optionally a microorganism selected from the group consisting of *Penicillium Candidum, Geotrichum candidum, Saccharomyces cerevisiae* and *Penicillum roqueforti.*

Hereinafter, in the following description, in place of the expression "cheese replacement food product of vegetable origin" or "cheese alternative food product", the expression "non-dairy cheese" will also be used, which has to be understood as having the same meaning.

Advantageously, the non-dairy cheeses of the present invention are free of any gelling, thickening or rheology-modifying additive.

A further advantage is that the milk used as raw material is obtained exclusively from oleaginous seeds, and is therefore free of lactose, which makes this product appropriate for lactose-intolerant subjects. Moreover, said milk obtained exclusively from oleaginous seeds is also free of casein, and this makes the non-dairy cheese according to the present invention appropriate also for casein-intolerant subjects.

In particular, the non-dairy cheeses of the present invention are produced according to the Italian cheese tradition, by the herein described process which does not change the organoleptic characteristics of the raw materials, being based on some cornerstones of the Italian agricultural tradition: almonds, hazelnuts and pistachio nuts.

Since raw materials maintain their characteristics unchanged, the present non-dairy cheeses advantageously have multiple benefits to the health of the consumer, including lowering the "bad" cholesterol (LDL) (thanks to the presence of phytosterols and oleic acid), improving carbohydrate , protein and fat metabolism (thanks to the presence of Riboflavin (Vit. B)) and a significant supply of antioxidants such as Tocopherol (Vit. E). Moreover, thanks to the presence of vitamin D, magnesium and phosphorus, said food products counteract osteoporosis, promoting calcium absorption, and counteract anemia thanks to folic acid.

A further advantage is that the non-dairy cheeses described herein properly reproduce the flavor, aroma and texture as well as the outer appearance and the inner structure of the corresponding dairy cheeses.

Advantageously, the process described in the present invention allows to produce different types of non-dairy cheeses depending on the temperature, humidity, maturation time conditions and microorganism species used.

### Detailed description

### Products

The invention relates to the production of cheese replacement food products of vegetable origin, i.e. non-dairy cheeses, obtained from seed milk, preferably almond milk, pistachio milk, hazelnut milk, sunflower seed milk or mixtures thereof.

Each of the food products of the present invention is free of additives such as thickening, gelling or rheology-modifying agents; in particular, it is free of enzymes, such as transglutaminase, which generally promote cross-linking of seed milk proteins to facilitate separation of the fermented coagulum from the waste whey.

The products of the present invention comprise different typologies of non-dairy cheeses, including soft and spreadable cheeses, blue cheeses, bloomy rind cheeses, up to semi-hard cheeses.

In particular, they include the following typologies of products:
- non-dairy "fresh spreadable" cheese, which is soft, has white paste and a characteristic sweet, fresh and slightly sour flavor due to lactic acid fermentation, has seeds aroma depending on the type of milk used in the preparation, it is overall similar to the dairy cheese Caprino Lombardo with lactic acid fermentation;
- non-dairy "young" cheese, with a certain texture, soft, with ivory-white colored paste, a soft and winding structure characterized by the typical sweet flavor, with sour and slightly fermented notes in the aroma of slightly toasted seeds, and it is overall similar to the dairy cheese Robiola di Roccoaverano;
- non-dairy, "bloomy rind" cheese, wherein the bloomy rind appears white, compact, and inside there is a soft, creamy and cream-colored paste, with delicate flavor of fused butter and cooked milk, with an aroma of slightly toasted seeds, with light spicy sensation of mushroom, due to the edible bloomy rind, and it is overall similar to the dairy cheese Brie de Meun;
- non-dairy "blue, bloomy rind" cheese, with a soft and creamy inside with sage green veining, a sweet flavor with faint sour notes, a strong aroma of cream, cooked butter, hay in the sun, with spicy mean persistence, and it is overall similar to the dairy cheese Gorgonzola;
- non-dairy "blue, charcoal-coated rind" cheese, with a soft and creamy inside with sage green veining and darker striations due to the charcoal, a sweet flavor with faint sour notes, a strong aroma of fermented cream, cooked butter, hay in the sun, with spicy mean persistence;
- non-dairy "ripened, semi-hard" cheese, with an inside made of crumbly, semi-hard paste, a strong and persistent flavor and aroma of walnut and chestnut, toasted almond, with lime and citrus fruits fragrance, and it is overall similar to the dairy cheese Silter della Valcamonica.

### Process

The process for obtaining the above-mentioned food products, i.e. the non-dairy cheeses of the invention, has the following main steps (the particular steps to produce each product are described in detail in the Examples).

The first step is the production of a milk made from oleaginous seeds, preferably almond, pistachio nut, hazelnut or sunflower seed milk or a combination thereof. To make the sunflower seed milk, carotene or turmeric may also be added.

The term "milk" or "seed milk" as used herein means an opalescent liquid or coacervate, possibly pasteurized, obtained by dispersing finely ground oleaginous seeds into water, and subsequently subjecting the thus-obtained dispersion to filtration or centrifugation in order to remove fibers.

The second step envisages the fermentation of the seed milk due to the addition of lactic ferments, in particular *Streptococcus Lactis subsp., diacetylactis,* and possibly other microorganisms, such as *Penicillium Candidum, Geotrichum candidum, Saccharomyces cerevisiae* and *Penicillum roqueforti,* for the production of non-dairy, possibly blue, cheeses.

These microorganisms are commonly used in dairy products of our food tradition.

In particular, *Streptococcus Lactis subsp., diacetylactis* is a Gram-positive bacterium and is a lactic ferment, i.e. it is able to convert lactose in lactic acid, thus acidifying the milk into which it is added.

In an embodiment for the production of a non-dairy bloomy rind cheese according to the invention, the lactic ferments used for milk fermentation are advantageously two or more lactic ferments selected from *Streptococcus Lactis subsp. Diacetylactis, Lactobacillus rhamnosus* and *Lactobacillus plantarum.*

In particular, *Lactobacillus rhamnosus* and *Lactobacillus plantuarum* are able to extend the shelf-life of the final product to 3-4 months, slowing down mold development on the rind in a controlled manner.

*Penicillium Candidum* and *Geotrichum candidum* are molds responsible for the formation of white mold on the surface of bloomy rind cheeses.

*Saccharomyces cerevisiae* is a yeast which, during its metabolism, produces carbon dioxide which is able to form openings in the inside of the curd to ensure the growth of the mold *Penicillum roqueforti,* responsible for the typical blue-veining of the blue cheeses.

Long fermentation times allow the bacteria to produce, besides lactic acid, also complex aromatic compounds, which give the product its characteristic flavor. At the end of said step, a thick, fermented coagulum forms on the surface, while the whey deposits onto the bottom.

The term "fermented milk coagulum" or "fermented coagulum", as used herein, means a "curd" as defined above. The terms "fermented coagulum" and "curd" are used interchangeably herein.

The subsequent step envisages to gently break the fermented curd and separate it from the whey, which represents the waste product of this process. The separation of the curd from whey can be made in two different ways: the curd may be transferred in a micro fiber cloth and the thus-obtained bundle may be hung, or the curd may be distributed as a thin layer onto cloth placed on pierced inclined planes.

After separation, the first draining of the curd from the residual whey occurs in 1-2 hours at a maximum temperature of about 20°C.

The subsequent processing steps are required to obtain other types of non-dairy cheese of the invention.

After the first draining, the curd wrapped in the cloth (or in the bundle) is subjected to a second draining from the residual whey, at a temperature of about 5°C possibly under a light pressure, for a time period between 18 and 48 hours, depending on the desired final product.

The subsequent step envisages salting the semi-finished product obtained at the end of the second draining. At this point, the non-dairy "fresh spreadable" cheese is obtained.

In order to obtain other types of non-dairy cheeses, the following shall apply.

The semi-finished product is dried for about 2-4 days, at a temperature between 6°C and 12°C, in the presence of a controlled relative humidity, turning upside down the semi-finished product 1-2 times a day.

The subsequent step is the maturation of the semi-finished product, which occurs at a temperature of about 10°C and for a variable time period depending on the desired finished product (from 6-8 days for non-dairy "young" cheese (which has a humidity content of about 55-65%) to 4-6 months for non-dairy "semi-hard" cheese (which has a humidity content of about 35-43%).

The packaging of the product is the last step before distribution; only the non-dairy "semi-hard" cheese is matured for months after packaging before to be ready for distribution.

The present invention will be further described with reference to some exemplifying embodiments which are provided below by way of nonlimiting illustration.

### EXAMPLE 1 - Milk production from oleaginous seeds

20 kg of ground oleaginous seeds were dispersed in 100 liters of water and the thus obtained aqueous dispersion was filtered through a non-woven fabric made of polyester. The fat amount contained in each type of the used oleaginous seed is shown in Table 1 below.

**Table 1: Fat amount per 100 grams of dry oleaginous seed**

| Oleaginous seed | Fat amount per 100 g of dry oleaginous seed |
|---|---|
| ALMOND | 53 g |
| HAZELNUT | 55 g |
| PISTACHIO NUTS | 64 g |
| SUNFLOWER SEEDS | 45 g |

The obtained milk was pasteurized at a temperature of 72°C for 5 minutes.

The milk used for the production of the non-dairy cheeses described below consists entirely of almond milk or a mixture consisting of almond milk and a milk selected from hazelnut milk, pistachio milk or sunflower seed milk.

### EXAMPLE 1B - Milk production from oleaginous seeds (II embodiment)

20 kg of ground almonds were dispersed in 50 liters of water and the thus obtained aqueous dispersion was filtered through a non-woven fabric made of polyester. At the end of filtration, 60L of concentrated almond milk and 20 kg of "okara", representing the waste product, were obtained.

The obtained milk was pasteurized at a temperature of 72°C for 20 minutes.

### EXAMPLE 1C - Milk production from oleaginous seeds (III embodiment)

20 kg of ground almonds having a mean particle size smaller than 30 µm, preferably about 20 µm, were dispersed in 30 liters of water and 50 liters of concentrated almond milk were obtained.

The milk obtained was pasteurized at a temperature of 74°C for 20 minutes.

### EXAMPLE 2 - Process for the production of non-dairy fresh spreadable cheese

The pasteurized milk described in Example 1, obtained by dispersing 20 kg of ground almond seeds in 100 1 of water was brought, in a thermostatic boiler, from the pasteurization temperature to the temperature of 28°C under stirring; the *Streptococcus Lactis subsp., diacetylactis* ferment, which had been previously re-activated for 20 minutes in the above milk at 30°C, was added.

After 8 minutes stirring, the boiler was covered, the stirrer turned off and fermentation was carried out at a constant temperature of 28°C for 22 hours; at the end of the fermentation, the pH was 4.4.

After the required time, a thick coagulum (curd) was obtained on the surface and a portion of the whey was on the bottom of the boiler. The coagulum was gently broken by means of a flat blade, making perpendicular cuts, so as to form squares of about 3 cm side and, after 10 minutes, the whey was discharged from the bottom of the boiler.

To separate the coagulum from the whey, the coagulum was distributed onto a microfiber cloth, which was then collected in a bundle and hung.

After 2 hours at a temperature of 20 °C, the bundle was cooled at 2°C by bringing it in a room at 2-5°C, and left draining for 24 hours in the presence of a relative humidity of about 60%.

Hereafter, at a temperature of 20°C, the bundle was opened, the drained coagulum was extracted by means of a spatula and finally salted by kneading several times to promote a good salt dissolution.

Cylindrical blocks of the kneaded mixture were formed by means of perforated baskets specific for this kind of production.

The product was then placed onto a reticular shelf and left maturing for 2 days at 2°C (relative humidity: 90%).

Finally, the product was packaged in parchment paper, optionally soaked with potassium sorbate (alternatively, preservation in oil is possible).

Before packaging, the finished products can be rolled in a light layer of spices, edible flowers or aromatic herbs.

### EXAMPLE 3 - Process for the production of non-dairy young cheese

The pasteurized milk described in Example 1, obtained by dispersing 20 kg of ground almond seeds in 100 1 of water, was brought, in a thermostatic boiler, from the pasteurization temperature to the temperature of 25°C under stirring; the *Streptococcus Lactis subsp. diacetylactis* ferment, which had been previously re-activated for 20 minutes in the above milk at 30°C, was added.

After 7 minutes stirring, the boiler was covered, the stirrer turned off and fermentation was carried out at a constant temperature of 25°C for 22 hours; at the end, the pH was 4.6.

After the required time, a thick coagulum was obtained on the surface, whereas a portion of the whey was on the bottom of the boiler. The coagulum was gently broken by means of a flat blade, making perpendicular cuts, so as to form squares of about 3 cm side and, after 10 minutes, the whey was discharged from the bottom of the boiler.

To separate the coagulum from the whey, the coagulum was distributed onto a microfiber cloth, which was then collected into a bundle and hung.

After 1.5 hours at a temperature of 22°C, the bundle was cooled at 4°C, and left draining for 30 hours in the presence of a relative humidity of about 60%.

Hereafter, at a temperature of 20°C, the bundle was opened, the drained coagulum was extracted by means of a spatula and finally salted by kneading several times to promote a good salt dissolution.

Once this step is over, the coagulum was inserted into perforated baskets and left draining for 36 hours at 4°C.

Then, truckles ("formaggelle") were gently extracted from the perforated baskets and left drying on a dense mesh-fence in a room with non-direct, circulating air at 8-10°C with relative humidity of 75-80% for 3 days turning the truckles upside down 1-2 times a day.

The subsequent maturation of the products occurred in a moderately ventilated room with relative humidity of 85-90%, at 9-10°C for 8 days, turning the blocks upside down every day in the first 4 days, and, subsequently, turning them upside down once every 2 days. The temperature was then lowered to 2-3°C, with relative humidity of 90%, for 2 days. The products were packaged in breathable paper and stored at 2-3°C.

### EXAMPLE 4 - Process for the production of non-dairy bloomy rind cheese (I embodiment)

The pasteurized milk described in Example 1, obtained by dispersing 20 kg of ground almond seeds in 100 1 of water, was brought, in a thermostatic boiler, from the pasteurization temperature to the temperature of 25°C under stirring; the *Streptococcus Lactis subsp., diacetylactis, Penicillium Candidum* microorganisms, which had been previously re-activated for 20 minutes in the above milk at 30°C, were then added.

After 10 minutes stirring, the boiler was covered, the stirrer turned off and fermentation was carried out at a constant temperature of 26°C for 24 hours; at the end, the pH was 4.5.

After the required time, a thick coagulum was obtained on the surface, whereas a portion of the whey was on the bottom of the boiler. The coagulum was gently broken by means of a flat blade, making perpendicular cuts, so as to form squares of about 3 cm side and, after 10 minutes, the whey was discharged from the bottom of the boiler.

To separate the coagulum from the whey, the coagulum was distributed onto a microfiber cloth, which was then collected into a bundle and hung.

After 1 hour at a temperature of 21 °C, the bundle was cooled at 3°C, and left draining for 36 hours in the presence of a relative humidity of about 60%.

Hereafter, at a temperature of 20°C, the bundle was opened, the drained coagulum was extracted by means of a spatula and finally salted by kneading several times to promote a good salt dissolution.

Once this step is over, the coagulum was inserted into perforated baskets and left draining for 40 hours at 3°C.

Then, truckles were gently extracted from the perforated baskets and left drying on a dense mesh-fence in a room with non-direct, circulating air at 8-10°C with relative humidity of 75-80% for 2.5 days, turning the truckles upside down 1-2 times a day.

The subsequent maturation of the products occurred in a moderately ventilated room with relative humidity of 85-90%, at 9-10°C for 18 days, turning the blocks upside down every day in the first 4 days, and, subsequently, turning them upside down once every 2 days. At the end of the maturation step, the rind was completely bloomed with a white, soft mold of medium-length .

The products were then placed in a ventilated room at a temperature of 2-3°C, with relative humidity of 90%, for 2 days.

The products were packaged in breathable paper and stored at 2-3°C.

### EXAMPLE 4B - Process for the production of non-dairy bloomy rind cheese (II embodiment)

For the second embodiment of a non-dairy bloomy rind cheese according to the invention, a milk produced according to Example 1 was used, using almonds as oleaginous seeds (20 kg of ground almond seeds in 100 1 of water).

The pasteurization step, differently than example 1, was carried out at 74°C for 20 minutes.

The thus-obtained milk was brought, in a thermostatic boiler, from the pasteurization temperature to the temperature of 28°C under stirring; the *Streptococcus Lactis subsp., diacetylactis, Lactobacillus rhamnosus* and *Lactobacillus plantarum* microorganisms, which had been previously re-activated for 20 minutes in the above milk at 30°C, were then added.

After 5 minutes stirring, the boiler was covered, the stirrer turned off and fermentation was carried out at a constant temperature of 27°C for 24 hours; at the end, the pH was 4.5.

After the required time, a thick coagulum was obtained on the surface, whereas a portion of the whey was on the bottom of the boiler. The coagulum was gently broken by means of a flat blade, making perpendicular cuts, so as to form squares of about 3 cm side and, after 10 minutes, the whey was discharged from the bottom of the boiler.

To separate the coagulum from the whey, the coagulum was distributed onto a microfiber cloth, which was then collected into a bundle and hung.

The bundle was cooled at 3°C, and left draining for 20 hours in the presence of a relative humidity of about 60%.

Hereafter, at a temperature of 20°C, the bundle was opened, the drained coagulum was extracted by means of a spatula and finally salted, by kneading several times to promote a good salt dissolution.

Once this step is over, the coagulum was inserted into perforated baskets and left draining for 24 hours at 3°C, in the presence of a relative humidity of about 60%.

Then, truckles were gently extracted from the perforated baskets and left drying on a dense mesh-fence in a room with non-direct, circulating air at 3 °C with relative humidity of 75-80% for 2 days, turning the truckles upside down once a day. Subsequently, the truckles were sprayed with a solution of distilled water and *Penicillium camemberti* (1 g of *Penicillium camemberti* per 10 L of distilled water with 0,4% sodium chloride).

The subsequent maturation of the products occurred in a moderately ventilated room with relative humidity of 90-95%, at 3°C for 18 days, turning the blocks upside down every day in the first 4 days, and, subsequently, turning them upside down once every 2 days. At the end of the maturation step, the rind was completely bloomed with a white, soft mold of medium-length.

The products were packaged in breathable paper and stored at 2-3°C.

### EXAMPLE 5 - Process for the production of non-dairy blue, bloomy rind cheese

The pasteurized milk described in Example 1, obtained by dispersing 20 kg of ground almond seeds in 100 1 of water, was brought, in a thermostatic boiler, from the pasteurization temperature to the temperature of 27°C under stirring; the *Streptococcus Lactis subsp., diacetylactis, Penicillium Candidum, Saccharomyces cerevisiae, Penicillium roqueforti* microorganisms, which had been previously re-activated for 20 minutes in the above milk at 30°C, were then added.

After 9 minutes stirring, the boiler was covered, the stirrer turned off and fermentation was carried out at a constant temperature of 25°C for 24 hours; at the end, the pH was 4.5.

After the required time, a thick coagulum was obtained on the surface, whereas a portion of the whey was on the bottom of the boiler. The coagulum was gently broken by means of a flat blade, making perpendicular cuts, so as to form squares of about 3 cm side and, after 10 minutes, the whey was discharged from the bottom of the boiler.

To separate the coagulum from the whey, the coagulum was distributed onto a microfiber cloth, which was then collected into a bundle and hung.

After 3 hours at a temperature of 24 °C, the bundle was cooled at 3°C, and left draining for 32 hours in the presence of a relative humidity of about 60%.

Hereafter, at a temperature of 20°C, the bundle was opened, the drained coagulum was extracted by means of a spatula.

The coagulum was inserted into perforated baskets, taking care to incorporate also small parts of the above-mentioned whey into the drained coagulum (4 grams of whey per 200 grams of curd), creating inhomogeneity zones, leaving possible air bubbles, without exerting any pressure; the draining step occurred at 4 hours at 20°C. Then, the perforated baskets were cooled to 2°C with a relative humidity of 90% for 34 hours.

Hereafter, truckles were gently extracted from the perforated baskets and left drying on a dense mesh-fence in a room with non-direct, circulating air at 8-10°C with relative humidity of 75-80% for 28 hours, then salting the two faces and the heel.

The subsequent maturation of the products occurred in a moderately ventilated room with relative humidity of 90-95%, at 4°C for 10 days, turning the blocks upside down every day in the first 4 days, and, subsequently, turning them upside down once every 2 days.

After 10 days, each non-dairy cheese block was pierced with needles in order to allow oxygen to circulate inside the block. Maturation occurred at 3°C, turning each block upside down every 2-3 days and piercing the face exposed to the air, for a total period of 50-60 days; at the end of said step, the presence of a completely bloomy rind with white, soft, mold of small length was observed and the typical green veining of dairy blue cheeses were observed inside each block.

### EXAMPLE 6 - Process for the production of non-dairy blue, charcoal-coated rind cheese

The pasteurized milk described in Example 1, obtained by dispersing 20 kg of ground almond seeds in 100 1 of water, was brought, in a thermostatic boiler, from the pasteurization temperature to the temperature of 26°C under stirring; the *Streptococcus Lactis subsp., diacetylactis, Geotrichum candidum, Saccharomyces cerevisiae, Penicillium roqueforti* microorganisms, which had been previously re-activated for 20 minutes in the above milk at 30°C, were then added.

After 10 minutes stirring, the boiler was covered, the stirrer turned off and fermentation was carried out at a constant temperature of 27°C for 23 hours; at the end, the pH was 4.4.

After the required time, a thick coagulum was obtained on the surface, whereas a portion of the whey was on the bottom of the boiler. The coagulum was gently broken by means of a flat blade, making perpendicular cuts, so as to form squares of about 3 cm side and, after 10 minutes, the whey was discharged from the bottom of the boiler.

To separate the coagulum from the whey, the coagulum was distributed onto a microfiber cloth, which was then collected into a bundle and hung.

After 4 hours at a temperature of 22°C, the bundle was cooled at 2°C, and left draining for 35 hours in the presence of a relative humidity of about 60%. Hereafter, at a temperature of 20°C, the bundle was opened, the drained coagulum was extracted by means of a spatula and finally salted by kneading several times to promote a good salt dissolution.

The coagulum was inserted into perforated baskets, taking care to incorporate also small parts of the above-mentioned whey into the drained coagulum (4 g of whey per 200 grams of clot), creating inhomogeneity zones, leaving possible air bubbles, without exerting any pressure; the draining step occurred for 4 hours at 20°C. Then, the perforated baskets were cooled to 2°C with a relative humidity of 90% for 29 hours.

Hereafter, truckles were gently extracted from the perforated baskets and left drying on a dense mesh-fence in a room with non-direct, circulating air at 8-10°C with relative humidity of 75-80% for 28 hours.

The whole outer surface of the truckles was then sprinkled with a vegetable charcoal (E153) fine powder, until it uniformly covered said outer surface.

The subsequent maturation of the products occurred in a moderately ventilated room with relative humidity of 90-95%, at 4°C for 10 days, turning the blocks upside down every day in the first 4 days, and, later, turning them upside down once every 2 days.

After 10 days, each non-dairy cheese block was pierced with needles in order to allow oxygen to circulate inside the block. Maturation occurred at 4°C, turning each block upside down every 2 days and piercing the face exposed to the air, for a total period of 60 days; at the end of said step, the presence of a completely dark rind was observed and the typical green veining of dairy blue cheeses were observed inside each block.

### EXAMPLE 7 - Process for the production of non-dairy semi-hard cheese

The pasteurized milk described in Example 1, obtained by dispersing 20 kg of ground almond seeds in 100 1 of water, was brought, in a thermostatic boiler, from the pasteurization temperature to the temperature of 26°C, under stirring; the microorganisms *Streptococcus Lactis subsp., diacetylactis,* microorganisms which had been previously re-activated for 20 minutes in the above milk at 30°C, were then added. After 8 minutes stirring, the boiler was covered, the stirrer turned off and fermentation was carried out at a constant temperature of 27°C for 24 hours; at the end, the pH was 4.5.

The mixture was heated to the temperature of 35°C for 5 minutes and then left cooling up to 20°C.

After the required time, a thick coagulum was obtained on the surface, whereas a portion of the whey was on the bottom of the boiler. The coagulum was gently broken by means of a flat blade, making perpendicular cuts, so as to form squares of about 3 cm side and, after 10 minutes, the whey was discharged from the bottom of the boiler.

To separate the coagulum from the whey, the coagulum was distributed onto a microfiber cloth, which was then collected into a bundle and hung.

After 2 hours at a temperature of 21°C, the bundle was cooled to 4°C, and left draining for 36 hours in the presence of a relative humidity of about 60%. Hereafter, at a temperature of 20°C, the bundle was opened, the drained coagulum was extracted by means of a spatula and finally salted by kneading several times to promote a good salt dissolution; 0.03 g of saffron per kg of curd were also added.

Once this step is over, the coagulum was inserted in perforated baskets (base diameter 7.5 cm, upper diameter 8.5 cm, height 8 cm), removing air bubbles and left draining for 38 hours at 2-4°C. Subsequently, a pressure was applied by placing a mass of 550 grams per 1000 grams of product on the perforated baskets, for the following 12 hours.

Hereafter, the truckles were gently extracted from the perforated baskets, left drying on a dense mesh-fence in a room with non-direct, circulating air at 10°C with relative humidity of 75-80%, 4 days, turning the truckles upside down twice a day.

The subsequent maturation of the products occurred in a moderately ventilated room with relative humidity of 85%, at 7-8°C for 10 days, turning the blocks upside down every day in the first 4 days, and, subsequently, turning them upside down once every 2 days.

The products were packaged in breathable paper and stored at 2-3°C at a relative humidity of about 50% and further matured for 5 months, turning the truckle upside down every 3 days and keeping the surface clean.

### EXAMPLE 8 - Process for the production of non-dairy bloomy rind cheese (almond-hazelnut milk)

An almond-hazelnut milk was prepared according to the process described in Example 1, i.e. by dispersing 10 kg of ground almonds and 10 kg of ground hazelnuts in 100 1 of water, filtering and subsequently pasteurizing. The thus obtained pasteurized milk was then brought, in a boiler, to the temperature of 25°C under stirring; the *Streptococcus Lactis subsp., diacetylactis, Penicillium Candidum* microorganisms, which had been previously re-activated for 20 minutes in the above milk at 30°C, were then added.

After 10 minutes stirring, the boiler was covered, the stirrer turned off and fermentation was carried out at a constant temperature of 26°C for 24 hours; at the end, the pH was 4.5.

After the required time, a thick coagulum was obtained on the surface, whereas a portion of the whey was on the bottom of the boiler. The coagulum was gently broken by means of a flat blade, making perpendicular cuts, so as to form squares of about 3 cm side and, after 10 minutes, the whey was discharged from the bottom of the boiler.

To separate the coagulum from the whey, the coagulum was distributed onto a microfiber cloth, which was then collected into a bundle and hung.

After 1 hour at a temperature of 21 °C, the bundle was cooled at 3°C, and left draining for 36 hours in the presence of a relative humidity of about 60%.

Hereafter, at a temperature of 20°C, the bundle was opened, the drained coagulum was extracted by means of a spatula and finally salted by kneading several times to promote a good salt dissolution.

Over this step is over, the coagulum was inserted into perforated baskets and left draining for 40 hours at 3°C.

Hereafter, the truckles were gently extracted from the perforated baskets and left drying on a dense mesh-fence in a room with non-direct, circulating air at 8-10°C with relative humidity of 75-80% for 2.5, turning the truckles upside down 1-2 times a day.

The subsequent maturation of the products occurred in a moderately ventilated room with relative humidity of 85-90%, at 9-10°C for 18 days, turning the blocks upside down every day in the first 4 days, and, subsequently, turning them upside down once every 2 days. At the end of the maturation step, the rind was completely bloomed with a white, soft mold of medium-length.

The products were then placed in a ventilated room at a temperature of 2-3°C, with relative humidity of 90%, for 2 days.

The products were packaged in breathable paper and stored at 2-3°C.

### EXAMPLE 9 - Process for the production of non-dairy fresh spreadable cheese (almond-sunflower seed milk)

An almond-sunflower seed milk was prepared according to the process described in Example 1, i.e. by dispersing 12 kg of ground almonds and 8 kg of sunflower seeds in 100 1 of water, filtering and subsequently pasteurizing. The thus obtained pasteurized milk was then brought, in a boiler, to a temperature of 28°C under stirring; the *Streptococcus Lactis subsp. diacetylactis* microorganisms, which had been previously re-activated for 20 minutes in the above milk at 30°C, were then added.

After 8 minutes stirring, the boiler was covered, the stirrer turned off and fermentation was carried out at a constant temperature of 28°C for 22 hours; at the end of the fermentation, the pH was 4.4.

After the required time, a thick coagulum (curd) was obtained on the surface and a portion of the whey was on the bottom of the boiler. The coagulum was gently broken by means of a flat blade, making perpendicular cuts, so as to form squares of about 3 cm side and, after 10 minutes, the whey was discharged from the bottom of the boiler.

To separate the coagulum from the whey, the coagulum was distributed onto a microfiber cloth, which was then collected into a bundle and hung.

After 2 hours at a temperature of 20 °C, the bundle was cooled to 2°C by bringing it in a room at 2-5°C, and left draining for 24 hours in the presence of a relative humidity of about 60%.

Hereafter, at a temperature of 20°C, the bundle was opened, the drained coagulum was extracted by means of a spatula and finally salted by kneading several times to promote a good salt dissolution. In this step, 0.03 g of turmeric per kg of curd were added.

Cylindrical blocks of the kneaded mixture were formed by means of perforated baskets specific for this kind of production.

The product was then placed onto a reticular shelf and left maturing for 2 days at 2°C (relative humidity: 90%).

Finally, the product was packaged in parchment paper, optionally soaked with potassium sorbate (alternatively, preservation in oil is possible).

Before packaging, the finished products can be rolled in a light layer of spices, edible flowers or aromatic herbs.

### EXAMPLE 10 - Comparative tasting test

A comparative tasting test between the almond milk-based, non-dairy bloomy rind cheese obtained according to the present invention and the product "SOFT RIPENED CHEESE REPLICA" obtained according to example nr. 20 of the patent application EP2943077, produced from almond-macadamia nut milk.

### Comparison of the processes

The EP'077 process is summarized below, comparing the different steps of the known process with those of the process of Example 4 according to the present invention.

| EP2943077, example 20 | Example 4 of the invention |
|---|---|
| The used mixture of pasteurized milk comprises 28% of cream (17.5 g of fat per 100 g of milk) and it is obtained from 55% almonds and 45% macadamia nuts. | The milk was obtained using 100 L of water per 20 kg of almonds (about 8.8% w/w of fat), pasteurized at 80 °C for 5 minutes. |
| The milk was heated at 32°C ± 3°C, then "Florica Danica", mesophilic starters (MAI 1, LF2, LF5, LF7, LF21, MD88 or other cultures), *Geotrichum candidum, Penicillium candidum,* and *Debaromyces culture hansenii,* previously re-activated, were added. | The pasteurized milk was brought, in a thermostatic boiler, from the pasteurization temperature to a temperature of 25°C under stirring, and *Streptococcus Lactis subsp., diacetylactis, Penicillium Candidum and Geotrichum candidum* microorganisms, which had been previously re-activated for 20 minutes in the same milk at 30°C, were added. |
| Possible addition of protease and/or lipase dissolved in water. | / |
| The milk in fermentation was maintained at 32°±3°C for 90 minutes. After one hour, the pH is down to 5.6 ± 0.2. Then, 55 g of transglutaminase*, which had been previously dissolved in water, were added at 43°C. The mixture was stirred until complete mixing of the milk, and left resting (not stirred) for the remaining coagulation time. Upon reaching the temperature of 37.8°C, the circulator was turned off and the mixture was held in water bath for 10 minutes. | After 10 minutes stirring, the boiler was covered and the stirrer was turned off; fermentation was carried out for 24 hours, at constant temperature of 26°C, at pH 4.5. |
| Possible addition of protease and/or lipase (dissolved in water). | |
| The mixture was removed from the water bath and covered with transparent film; fermentation was carried out for 12 hours at room temperature. | |
| After 12 hours, the curd (pH 4.4) was cut in squares of one-inch side and left resting for 5 minutes. | The coagulum is broken by means of a flat blade, making perpendicular cuts, so as to form squares of about 3 cm side, and waiting for 10 minutes. |
| The whey was then separated from the curd through muslin (50% curd and 50% whey). | |
| Possible addition of protease and/or lipase dissolved in water. | Separation of the coagulum from the whey in a bundle made of microfiber cloth. |
| The curd was beat by means of a whisk for 5 minutes, put into micropierced moulds (height 8 cm, base diameter 7.5 cm, upper diameter 8.5 cm) until the desired weight (200 grams) has been reached and left resting for 1 hour. | |
| After one hour, the curd was covered and drained for 1 hour at room temperature in the mould ; then, it was further drained for 24 hours at 2.2°C under light pressure. | After 1 hour at 21 °C, the bundle was drained at 3°C for 36 hours in the presence of a relative humidity of about 60%. Once the required time was over, at 20°C, the bundle was opened and the drained coagulum was extracted and salted by kneading. |
| The drained curds were immersed in saturated brine pre-heated to 10°C (time dependent on the dimensions, e.g. 170 g of curd in brine for 20 minutes). | Absence of salting in brine. |
| After brine, the moulds were placed to drain and brought at 2.2°C for 24 hours. | The salted coagulum was inserted into perforated baskets (height 8 cm, base diameter 7.5 cm, upper diameter 8.5 cm) until the desired weight (200 grams) has been reached, gently pressing so as to remove the possible air bubbles, exerting a light pressure, and left draining for 40 hours at 3°C. |
| Each truckle was removed from the mould and placed onto a draining matting at 2.2°C for 24 hours. | After completing draining, the truckles were gently extracted from the perforated baskets and placed onto a dense mesh-fence at 8- 10°C, relative humidity of 75-80%, in a room with non-direct, circulating air and dried for 2.5 days, turning the blocks upside down once a day starting from the second day. |
| Then, it was transferred into a drying room at 15°C, with relative humidity of 75% for 3 days. | |
| The maturation of truckles occurred onto an aging shelf, in a room at 10°C, relative humidity of 90% and continuous air stream. | In a moderately ventilated room, with relative humidity of 85-90%, the maturation of the products occurred at 9-10°C for 18 days, turning the blocks upside down every day in the first 4 days, and, later, once every 2 days. |
| Every 2 days, the replica was turned and the mat was changed. After 7 days the cheese was transferred onto a maturation shelving which allows maximum aeration for other 7 or more days until the covering is complete. | |
| After mold covering had been completed, the non-dairy cheese is brought to 2.2 °C for 16 hours and then packaged in a breathable paper. | After mold covering had been completed, the non-dairy cheese is brought to 2-3°C for 2 days, then packaged in a breathable paper and stored at 2-3°C. |
| * : the Example of EP'077 did not define the transglutaminase amount required to obtain a product sufficiently compact to be inserted into perforated baskets and to allow the proper draining from the whey; the Applicant found that said amount corresponds to 50-60 grams of transglutaminase per 1 kilogram of the total composition of almonds and macadamia nuts. | |

There are some substantial differences between the process according to EP'077 and that according to the present invention, some of which influence the characteristics of the dairy cheese obtained by such processes.

According to the present invention, the raw material only consists of oleaginous seeds, in particular nut seeds, which are cold-processed so as to maintain the organoleptic characteristics of the original products as much unchanged as possible. In particular, due to the cold-processing of the oleaginous seeds, the obtained coacervate is substantially an aqueous cold-extract of the used oleaginous seeds, to which neither cream nor semi-finished products are added. On the contrary, the process according to EP'077 envisages that the oleaginous seeds milk is a skimmed milk which, moreover, is mixed with a semi-finished product, i.e. a fat cream in milk; furthermore, the oleaginous seeds used to make said milk comprise macadamia nuts, a non-European product.

The process according to the present invention does not comprise the addition of any thickening, gelling or rheology-modifying agent; on the contrary, EP'077 envisages the necessary addition of transglutaminase, an enzyme promoting the formation of fermented coagulum and the separation of the latter from the waste whey, and optionally the addition of lipases and proteases enhancing the aromatic quality of the final product.

The step of fermentation of the product of the present invention can occur until 24 hours in order to have a creamy texture and the typical flavor of a dairy cheese. The fermentation step of EP'077 occurs in about half of that time, i.e. in 12 hours, possibly by adding lipases and proteases to enhance the pleasantness of the flavor of the finished product.

The texture of the coagulum obtained following the fermentation according to EP'077 is much more solid than that of the coagulum obtained according to the present invention, and it is moreover of a gelatinous texture. Indeed, the addition of transglutaminase to the milk in fermentation according to EP'077 solidifies the coagulum to such an extent that it has to be beat with a whisk for several minutes before it can be put into a mould. Instead, the coagulum according to the present invention, which is free of transglutaminase, has a much softer and non-gelatinous texture, which is able to be drained in cloth and subsequently inserted into perforated baskets.

A further difference between the above described processes lies in the salting step. In EP'077, said step occurs by means of total immersion of the curds, drained from the whey, in brine. Instead, the process according to the present invention envisages that salting occurs by manual kneading of the drained coagulum for a few minutes to promote an homogeneous salt distribution; the coagulum is expressly not immersed in water (as brine) because there is the risk of involuntarily dissolve parts of the coagulum and, moreover, a further step of drying would be required.

### Product comparison

Once the non-dairy cheeses according to the above-mentioned processes had been obtained, said products were subjected to tasting by a panel of tasters in order to compare their (outer and inner) appearance and sensory (aroma, flavor, texture) characteristics.

In particular, the tested products were the following;
- a non-dairy, bloomy rind soft cheese obtained according to the above-mentioned process of EP'077 (product A), with a maturation period of 30 days,
- a non-dairy, bloomy rind almond cheese, obtained according to the above-mentioned process described in Example 4 of the present invention (product B), with a maturation period of 30 days, and
- a non-dairy, bloomy rind almond cheese obtained according to Example 4 which differs however from product B because it was allowed to mature 15 days longer than product B (product C).

The comparative tasting test was carried out using the "Scheda Descrittiva per l'Assaggio dei Formaggi ver 2011" (Descriptive Sheet for Cheese Tasting 2011 version) provided by ONAF ("Organizzazione Nazionale Assaggiatori Formaggi").

The specific intensity scales were defined and shared, thereby defining an explicative vocabulary of the descriptors used for the single characteristics, identifying the reference products for the single descriptors, with a methodology specific for the preparation of the samples for tasting. Six expert tasters took part to the tasting test.

The examination was divided in various steps, using the same descriptors for each taster: for aroma and smell, the Descriptors Wheel AIR2039 (F. Bérodier) was used; for the descriptive vocabulary, the diagram from "La Degustazione dei Formaggi - analisi sensoriale" of M.Zannoni-B.Morara-L.Bertozzi, Ed. Anfosc 2002 was used.

A descriptive examination and a quantitative examination were performed to evaluate the visual, tactile and gustatory aspects of the above-mentioned food products and to compare them according to the above-mentioned definitions.

### Descriptive Examination (13 descriptors)

- External tactile visual examination (form, rind, color);
- Internal tactile visual examination (color and portion under the rind, structure and discontinuity);
- Olfactory, gustatory and tactile examination (smell, flavor, aromas, trigeminal sensations, structure, taste-olfactory persistence);

Table 2 below summarizes the results of the descriptive examination.

| | | Product A | Product B | Product C |
|---|---|---|---|---|
| Tactile visual examination | | | | |
| Outer appearance | Form | Truncated conical, irregular, slightly concave surface | Truncated conical irregular, irregular edges | Truncated conical/ cylindrical, irregular, the surface is slightly concave and slightly moist to the touch, raised edges |
| | Rind | Soft, smooth, clean, bloomy, white mold, moist | Slightly rough, soft, clean, slightly discontinuous, with velvety white mold | Rough non-uniform, moist, soft and velvety, with white mold |
| | Color | More or less uniform white | Pale cream white, speckled beige, non -uniform | Speckled, non-uniform, light, white/beige |
| Inner appearance | Color, Under-rind | Brown -colored under-rind, color of paste: brown-cream-hazelnut | Color of under-rind: light yellow cream paste: uniform cream, , white cream, uniform | Milky white color, uniform with darker under-rind, cream colored, creamy white |
| | Structure, discontinuity elements | Moist, elastic, quite compact, smooth, uniform and greasy | Elastic, soft, continuous, uniform, compact creamy paste with detachable rind | Soft, creamy, with detachable rind, compact and dense paste |

| Olfactory, gustatory and tactile examination | | | | |
|---|---|---|---|---|
| Paste Appearance | Smell | Marked, humus, meat broth, vegetable broth, fermented grass, mold, slightly perceptible boiled potato and boiled vegetables. | Vegetable broth, boiled milk, mushroom, feeble, fresh hay and grass clippings | Faint fresh grass, cooked milk, vegetable broth and boiled potato. |
| | Flavor | A bit sour, a bit flavorful, a bit sweet | Slightly sour, delicate with light sourness | Light sourness |
| | Aroma | Overcooked milk, caramelized fused butter, rind: moist spicy hay, slightly toasted, fruity, meat broth | Fermented cooked milk, salty fresh cream, mushrooms | Fruity, dried fruit almond, slight aroma of mushroom and hay, fused butter, cream, humus, mushroom |
| | Trigeminal Sensations (inner paste of non -dairy cheese) | Spicy quite intense, averagely adhesive not so crumbly, moist, pungent in the throat, light tannic flavor after a few seconds | A bit spicy | Slightly spicy |
| | Structure | Compact but soft, a bit creamy, it slightly sticks in the throat and onto the palate, similar to a pudding structure | Elastic, continuous, high adhesiveness, melting, creamy | Very soft and creamy, high solubility |
| | Taste-olfactory Persistence | Persistent, intermediate high | Quite persistent, intermediate persistence | Long and pleasant, intermediate-long persistence |
| Notes | | | | Most appreciated product |

Evaluating the outer appearance, product A showed a soft and uniform white mold, and a quite thick rind (observed after the product was cut); moreover, the portion under the rind and the inner paste show a dark-brown and a light-brown color. A quite intense smell of humus and fermented hay was perceived, with an aroma very similar to that of meat broth and toasted aroma . Although being soft, the texture of the paste was not creamy, but instead it was more similar to that of a pudding.

Product B and product C showed a white mold which is typical of the bloomy rind, a slightly discontinuous surface, a Cream-White color, an aroma very similar to butter/cream, notes of almond and of cooked milk; in particular, product C showed a higher creaminess than the other tested products.

### Quantitative Examination: the scores (7 voted variables)

- Outer appearance: 4 Awful - 5 Insufficient - 6 Sufficient - 7 Fair - 8 Good - 9 Very good - 10 Excellent;
- Inner appearance (paste structure and color): 4 Awful - 5 Insufficient - 6 Sufficient - 7 Fair - 8 Good - 9 Very good - 10 Excellent;
- Perceptions (smell, flavor, structure): 8 Awful - 10 Insufficient - 12 Sufficient - 14 Fair - 16 Good - 18 Very good - 20 Excellent.

**Table 3 below shows the results of the scores received by each product, the total score and the mean value of the scores.**

| | | | taster1 | taster2 | taster3 | taster4 | taster5 | taster6 | tot | mean |
|---|---|---|---|---|---|---|---|---|---|---|
| Prod .A | Appearance | Outer appearance | 8 | 8 | 8 | 8 | 8 | 8 | 48 | 8,00 |
| Prod.A | Appearance | Inner appearance Paste Color | 7 | 6 | 5 | 7 | 5 | 6 | 36 | 6,00 |
| Prod.A | Appearance | Inner appearance Structure | 9 | 9 | 5 | 7 | 6 | 5 | 41 | 6,83 |
| Prod.A | Perceptions | Smell Perception | 10 | 10 | 10 | 10 | 14 | 12 | 66 | 11,00 |
| Prod.A | Perceptions | Flavor Perception | 16 | 12 | 10 | 12 | 14 | 12 | 76 | 12,67 |
| Prod.A | Perceptions | Structure Perception | 12 | 12 | 10 | 10 | 14 | 12 | 70 | 11,67 |
| Prod.A | Perceptions | Tot | 62 | 57 | 48 | 54 | 61 | 55 | 337 | 56,17 |
| Prod B | Appearance | Outer appearance | 8 | 7 | 9 | 8 | 7 | 8 | 47 | 7,83 |
| Prod B | Appearance | Paste Color | 9 | 9 | 9 | 9 | 8 | 9 | 53 | 8,83 |
| Prod B | Appearance | Paste Structure | 8 | 7 | 9 | 9 | 9 | 8 | 50 | 8,33 |
| Prod B | Perceptions | Smell-Aroma | 18 | 10 | 18 | 16 | 14 | 16 | 92 | 15,33 |
| Prod B | Perceptions | Flavor | 18 | 14 | 20 | 16 | 16 | 16 | 100 | 16,67 |
| Prod B | Perceptions | Structure | 16 | 16 | 20 | 16 | 16 | 16 | 100 | 16,67 |
| Prod B | Perceptions | Tot | 77 | 63 | 85 | 74 | 70 | 73 | 442 | 73,67 |
| Prod C | Appearance | Outer appearance | 9 | 7 | 9 | 8 | 7 | 9 | 49 | 8,17 |
| Prod C | Appearance | Paste Color | 10 | 9 | 8 | 9 | 9 | 9 | 54 | 9,00 |
| Prod C | Appearance | Paste Structure | 9 | 9 | 9 | 9 | 9 | 8 | 53 | 8,83 |
| Prod C | Perceptions | Smell aroma | 12 | 12 | 18 | 16 | 16 | 16 | 90 | 15,00 |
| Prod C | Perceptions | Flavor | 18 | 18 | 20 | 18 | 16 | 18 | 108 | 18,00 |
| Prod C | Perceptions | Structure | 18 | 16 | 20 | 18 | 18 | 14 | 104 | 17,33 |
| Prod C | Perceptions | Tot | 76 | 71 | 84 | 78 | 75 | 74 | 458 | 76,33 |

As regards the outer appearance, all the tested products showed an appearance evaluated as approximately "Good" by the tasters; however, product C received the highest score on the average.

As regards the color of the inner appearance, the paste of product A received the average score "Sufficient", product B received the average score of almost "Very good", product C received the average score "Very good".

The same score trend was also observed in those awarded to the inner structure of the tested products; in particular, product C turned out to be the best one, whereas product A the worst one.

As regards the perceptions of smell, aroma-flavor and structure, product A turned out to be insufficient in the perception of both smell and structure; product C turned out to be the best one in the perception of flavor and structure, and it received an average score very close to that of product B, which was evaluated as the best one in the perception of smell.

The total scores for the tested products show that product A (obtained according to the known process of EP'077) turned out to be the least valued one in comparison to the other two products; product B (non-dairy bloomy rind cheese according to the present invention) received the total score "Very good", whereas product C (non-dairy bloomy rind cheese according to the present invention with 15 maturation days more than product B) turned out to be the best product, having a total score close to "Excellent".

The results of this comparative tasting test show that the products according to the present invention are better than the one described in EP'077 for all the evaluated parameters.

## Claims

1. A process for the production of a cheese replacement food product of vegetable origin, comprising the steps of:
a) producing a non-dairy milk from at least one oleaginous seed;
b) carrying out a fermentation for 20-36 hours, preferably 22-30 hours, at a temperature between 22°C and 31°C, until a pH between 4.0 and 5.0, preferably between 4.4 and 4.6, is reached, by adding at least one lactic ferment and optionally another microorganism selected from the group comprising *Penicillium Candidum, Geotrichum candidum, Saccharomyces cerevisiae* and *Penicillum roqueforti* to said non-dairy milk, thus obtaining a curd and a whey;
c) separating said curd from said whey;
d) performing a first draining of said curd;
e) performing a second draining of said curd, optionally applying a predetermined pressure on it, thus obtaining a drained curd;
f) drying said drained curd for at least 2 days, preferably 2-4 days at a temperature between 6°C and 12°C, preferably 8-10°C, in the presence of a relative humidity between 75% and 80%, obtaining a dry semi-finished product;
g) maturing said dry semi-finished product, in the presence of a relative humidity between 75% and 90%.

2. The process according to claim 1, wherein said step a) of producing a non-dairy milk from at least one oleaginous seed comprises the following steps: preparing a 14-30% w/w aqueous dispersion of ground oleaginous seeds selected from the group consisting of almond, pistachio, hazelnut, sunflower seeds or mixtures thereof; pasteurizing the dispersion at a temperature between 55-78°C for a time period of 5-20 minutes, obtaining said non-dairy milk.

3. The process according to claim 1, wherein said step a) of producing a non-dairy milk from at least one oleaginous seed comprises the following steps: preparing a 14-30% w/w aqueous dispersion of ground oleaginous seeds selected from the group consisting of almond, pistachio, hazelnut, sunflower seeds or mixtures thereof; subjecting the dispersion to filtration or centrifugation, obtaining a liquid phase and a solid phase; pasteurizing said liquid phase at a temperature between 55-78°C for a period of 5-20 minutes, obtaining said non-dairy milk.

4. The process according to any one of claims 1-3, wherein said at least one lactic ferment of said step b) consists of *Streptococcus Lactis subsp. diacetylactis.*

5. The process according to any one of claims 1-4, wherein said first draining is carried out at a temperature between 2°C and 5°C for a time period between 24-36 hours.

6. The process according to claim 5, wherein:
- said second draining is carried out at a temperature between 2°C and 4°C for a time period between 24-48 hours;
- said maturing step occurs for 6-8 days at a temperature between 9°C and 10°C.

7. The process according to any one of claims 1-3, wherein said at least one lactic ferment of said step b) consists of two or more lactic ferments selected from the group consisting of *Streptococcus Lactis subsp. Diacetylactis, Lactobacillus rhamnosus* and *Lactobacillus plantarum*.

8. The process according to claim 7, wherein:
- said first draining is carried out at a temperature between 2°C and 5°C for a time period between 24-36 hours;
- said second draining is carried out at a temperature between 2°C and 4°C for a time period between 24-48 hours;
- said maturing step occurs for 15-20 days at a temperature between 9°C and 10°C.

9. The process according to claim 5, wherein:
- said second draining is carried out at a temperature between 18°C and 22°C for a time period between 8-10 hours, after incorporating into the curd obtained from the first draining an amount of said whey between 1% and 5% by weight of the curd weight;
- said maturing step occurs for 50-60 days at a temperature between 3°C and 5°C.
the process further comprising a step of piercing said dry semi-finished product before the maturation step.

10. The process according to claim 5, wherein:
- said first draining is carried out at a temperature between 2°C and 3°C;
- said second draining is carried out at a temperature between 18°C and 22°C for a time period between 8-10 hours, after incorporating into the curd obtained from the first draining a quantity of said whey between 1% and 5% by weight of the curd weight;
- said maturing step occurs for 50-60 days at a temperature between 3°C and 5°C,
the process further comprising a step of coating the outer surface of said dry semi-finished product with powdered vegetable charcoal and a subsequent step of piercing said dry semi-finished product, before the maturation step.

11. The process according to claim 5, wherein:
- said second draining is carried out at a temperature ranging from 2°C to 3°C for a time period ranging from 24 to 36 hours, applying a pressure of between 940 and 1300 Pa onto the curd for 12 hours;
- said maturing step occurs for 4-6 months at a temperature between 2°C and 3°C.

12. The process according to claim 11, comprising a step of adding turmeric and/or saffron in said step a) of producing the non-dairy milk.

13. The process according to any one of claims 1 to 5, comprising, after said step g), a step h) of bringing and maintaining said mature semi-finished product at a temperature between 2°C and 5°C, preferably at 2-3°C, for a period of 1-2 days at a relative humidity between 85% and 90%.

## Patentansprüche

1. Verfahren zur Herstellung eines Käseersatz-Nahrungsmittelprodukts pflanzlichen Ursprungs, das folgende Schritte aufweist:
a) Herstellen einer pflanzlichen Milch aus mindestens einem ölhaltigen Samenmaterial;
b) Durchführen einer Fermentation für 20 bis 36 Stunden, vorzugsweise 22 bis 30 Stunden, bei einer Temperatur zwischen 22 °C und 31 °C, bis ein pH-Wert zwischen 4,0 und 5,0, vorzugsweise zwischen 4,4 und 4,6, erreicht wird, unter Zugabe von mindestens einem Milchferment und optional einem weiteren Mikroorganismus, ausgewählt aus der Gruppe bestehend aus *Penicillium candidum, Geotrichum candidum, Saccharomyces cerevisiae* und *Penicillum roqueforti,* zu dieser pflanzlichen Milch, wodurch ein Quark und eine Molke erhalten werden;
c) Trennen des Quarks von der Molke;
d) Durchführen einer ersten Entwässerung des Quarks;
e) Durchführen einer zweiten Entwässerung des Quarks, optional unter Ausübung eines vorbestimmten Drucks auf diesen, wodurch ein entwässerter Quark erhalten wird;
f) Trocknen des entwässerten Quarks für mindestens 2 Tage, vorzugsweise 2 bis 4 Tage, bei einer Temperatur zwischen 6 °C und 12 °C, vorzugsweise 8 bis 10 °C, in Gegenwart einer relativen Luftfeuchtigkeit zwischen 75 % und 80 %, wodurch ein trockenes Halbfertigerzeugnis erhalten wird;
g) Reifen des trockenen Halbfertigerzeugnisses in Gegenwart einer relativen Luftfeuchtigkeit zwischen 75 % und 90 %.

2. Verfahren nach Anspruch 1, wobei der Schritt a) zum Herstellen einer pflanzlichen Milch aus mindestens einem ölhaltigen Samenmaterial die folgenden Schritte aufweist: Bereitstellen einer 14 bis 30 gewichtsprozentigen wässrigen Dispersion aus gemahlenen ölhaltigen Samen, ausgewählt aus der Gruppe bestehend aus Mandel-, Pistazien-, Haselnuss-, Sonnenblumenkernen oder Mischungen davon; Pasteurisieren der Dispersion bei einer Temperatur zwischen 55 und 78 °C über einen Zeitraum von 5 bis 20 Minuten, wodurch die pflanzliche Milch erhalten wird.

3. Verfahren nach Anspruch 1, wobei der Schritt a) zum Herstellen einer pflanzlichen Milch aus mindestens einem ölhaltigen Samenmaterial die folgenden Schritte aufweist: Bereitstellen einer 14 bis 30 gewichtsprozentigen wässrigen Dispersion aus gemahlenen ölhaltigen Samen, ausgewählt aus der Gruppe bestehend aus Mandel-, Pistazien-, Haselnuss-, Sonnenblumenkernen oder Mischungen davon; Unterziehen der Dispersion einer Filtration oder Zentrifugation, wodurch eine flüssige Phase und eine feste Phase erhalten werden; Pasteurisieren der flüssigen Phase bei einer Temperatur zwischen 55 und 78 °C über einen Zeitraum von 5 bis 20 Minuten, wodurch die pflanzliche Milch erhalten wird.

4. Verfahren nach einem der Ansprüche 1 bis 3, wobei das mindestens eine Milchferment des Schrittes b) aus *Streptococcus lactis subsp. diacetylactis* besteht.

5. Verfahren nach einem der Ansprüche 1 bis 4, wobei das erste Entwässern bei einer Temperatur zwischen 2 °C und 5 °C über einen Zeitraum von 24 bis 36 Stunden durchgeführt wird.

6. Verfahren nach Anspruch 5, wobei:
- die zweite Entwässerung bei einer Temperatur zwischen 2 °C und 4 °C über einen Zeitraum von 24 bis 48 Stunden durchgeführt wird;
- der Reifungsschritt 6 bis 8 Tage bei einer Temperatur zwischen 9 °C und 10 °C stattfindet.

7. Verfahren nach einem der Ansprüche 1 bis 3, wobei das mindestens eine Milchferment des Schrittes b) aus zwei oder mehr Milchfermenten besteht, ausgewählt aus der Gruppe bestehend aus *Streptococcus lactis subsp. diacetylactis, Lactobacillus rhamnosus und Lactobacillus plantarum.*

8. Verfahren nach Anspruch 7, wobei:
- die erste Entwässerung bei einer Temperatur zwischen 2 °C und 5 °C übereinen Zeitraum von 24 bis 36 Stunden durchgeführt wird;
- die zweite Entwässerung bei einer Temperatur zwischen 2 °C und 4 °C über einen Zeitraum von 24 bis 48 Stunden durchgeführt wird;
- der Reifungsschritt 15 bis 20 Tage bei einer Temperatur zwischen 9 °C und 10 °C stattfindet.

9. Verfahren nach Anspruch 5, wobei:
- die zweite Entwässerung bei einer Temperatur zwischen 18 °C und 22 °C über einen Zeitraum von 8 bis 10 Stunden durchgeführt wird, nachdem in den bei der ersten Entwässerung erhaltenen Quark eine Menge der Molke zwischen 1 Gew.-% und 5 Gew.-% des Quarkgewichts eingearbeitet wird;
- der Reifungsschritt 50 bis 60 Tage bei einer Temperatur zwischen 3 °C und 5 °C stattfindet,
wobei das Verfahren ferner einen Schritt des Durchstechens des trockenen Halbfertigerzeugnisses vor dem Reifungsschritt aufweist.

10. Verfahren nach Anspruch 5, wobei:
- die erste Entwässerung bei einer Temperatur zwischen 2 °C und 3 °C durchgeführt wird;
- die zweite Entwässerung bei einer Temperatur zwischen 18 °C und 22 °C über einen Zeitraum von 8 bis 10 Stunden durchgeführt wird, nachdem in den bei der ersten Entwässerung erhaltenen Quark eine Menge der Molke zwischen 1 Gew.-% und 5 Gew.-% des Quarkgewichts eingearbeitet wird;
- der Reifungsschritt 50 bis 60 Tage bei einer Temperatur zwischen 3 °C und 5 °C stattfindet,
wobei das Verfahren ferner einen Schritt des Beschichtens der äußeren Oberfläche des trockenen Halbfertigerzeugnisses mit pulverisierter pflanzlicher Holzkohle und einen anschließenden Schritt des Durchstechens des trockenen Halbfertigerzeugnisses vor dem Reifungsschritt aufweist.

11. Verfahren nach Anspruch 5, wobei:
- die zweite Entwässerung bei einer Temperatur im Bereich von 2 °C bis 3 °C über einen Zeitraum von 24 bis 36 Stunden durchgeführt wird, wobei 12 Stunden lang ein Druck zwischen 940 und 1300 Pa auf den Quark ausgeübt wird;
- der Reifungsschritt 4 bis 6 Monate bei einer Temperatur zwischen 2 °C und 3 °C stattfindet.

12. Verfahren nach Anspruch 11, das einen Schritt der Zugabe von Kurkuma und/oder Safran in dem Schritt a) der Herstellung der pflanzlichen Milch aufweist.

13. Verfahren nach einem der Ansprüche 1 bis 5, das nach dem Schritt g) einen Schritt h) aufweist, in dem das gereifte Halbfertigerzeugnis für einen Zeitraum von 1 bis 2 Tagen bei einer relativen Luftfeuchtigkeit zwischen 85 % und 90 % auf eine Temperatur zwischen 2 °C und 5 °C, vorzugsweise bei 2 °C bis 3 °C, gebracht und auf dieser gehalten wird.

## Revendications

1. Procédé de production d'un produit alimentaire de substitution de fromage d'origine végétale, comprenant les étapes consistant à :
a) produire un lait non laitier à partir d'au moins une graine oléagineuse ;
b) effectuer une fermentation pendant 20-36 heures, de préférence 22-30 heures, à une température comprise entre 22 °C et 31 °C, jusqu'à atteindre un pH compris entre 4,0 et 5,0, de préférence entre 4,4 et 4,6, en ajoutant au lait non laitier au moins un ferment lactique et éventuellement un autre microorganisme choisi dans le groupe comprenant *Penicillium Candidum, Geotrichum candidum, Saccharomyces cerevisiae* et *Penicillum roqueforti,* obtenant ainsi un caille et un petit-lait ;
c) séparer le caille du petit-lait ;
d) effectuer un premier égouttage du caille ;
e) effectuer un second égouttage du caille, éventuellement en appliquant dessus une pression prédéterminée, obtenant ainsi un caille égoutte ;
f) sécher le caille égoutte pendant au moins 2 jours, de préférence 2-4 jours à une température comprise entre 6 °C et 12 °C, de préférence 8-10 °C, en présence d'une humidité relative comprise entre 75 % et 80 %, obtenant un produit semi-fini sec ;
g) faire mûrir le produit semi-fini sec en présence d'une humidité relative comprise entre 75 % et 90 %.

2. Procédé selon la revendication 1, dans lequel l'étape a) de production d'un lait non laitier à partir d'au moins une graine oléagineuse comprend les étapes suivantes : préparation d'une dispersion aqueuse à 14-30 % p/p de graines oléagineuses broyées choisies dans le groupe constitué par les amandes, les pistaches, les noisettes, les graines de tournesol, ou leurs mélanges ; pasteurisation de la dispersion à une température comprise entre 55 et 78 °C pendant une durée de 5-20 minutes, obtenant le lait non laitier.

3. Procédé selon la revendication 1, dans lequel l'étape a) de production d'un lait non laitier à partir d'au moins une graine oléagineuse comprend les étapes suivantes : préparation d'une dispersion aqueuse à 14-30 % p/p de graines oléagineuses broyées choisies dans le groupe constitué par les amandes, les pistaches, les noisettes, les graines de tournesol, ou leurs mélanges ; soumission de la dispersion à une filtration ou une centrifugation, obtenant une phase liquide et une phase solide ; pasteurisation de la phase liquide à une température comprise entre 55 et 78 °C pendant une durée de 5-20 minutes, obtenant le lait non laitier.

4. Procédé selon l'une quelconque des revendications 1 à 3, dans lequel ledit au moins un ferment lactique de l'étape b) est du *Streptococcus lactis subsp. diacetylactis.*

5. Procédé selon l'une quelconque des revendications 1 à 4, dans lequel le premier égouttage est effectué à une température comprise entre 2 °C et 5 °C pendant une durée comprise entre 24 et 36 heures.

6. Procédé selon la revendication 5, dans lequel :
- le second égouttage est effectué à une température comprise entre 2 °C et 4 °C pendant une durée comprise entre 24 et 48 heures ;
- l'étape de maturation se produit pendant 6-8 jours à une température comprise entre 9 °C et 10 °C.

7. Procédé selon l'une quelconque des revendications 1 à 3, dans lequel ledit au moins un ferment lactique de l'étape b) consiste en deux ou plusieurs ferments lactiques choisis dans le groupe constitué par *Streptococcus lactis subsp. diacetylactis, Lactobacillus rhamnosus* et *Lactobacillus plantarum.*

8. Procédé selon la revendication 7, dans lequel :
- le premier égouttage est effectué à une température comprise entre 2 °C et 5 °C pendant une durée comprise entre 24 et 36 heures ;
- le second égouttage est effectué à une température comprise entre 2 °C et 4 °C pendant une durée comprise entre 24 et 48 heures ;
- l'étape de maturation se produit pendant 15-20 jours à une température comprise entre 9 °C et 10 °C.

9. Procédé selon la revendication 5, dans lequel :
- le second égouttage est effectué à une température comprise entre 18 °C et 22 °C pendant une durée comprise entre 8 et 10 heures, après avoir incorporé au caille obtenu à partir du premier égouttage une quantité de petit-lait comprise entre 1 % et 5 % en poids du poids du caille ;
- l'étape de maturation se produit pendant 50-60 jours à une température comprise entre 3 °C et 5 °C,
le procédé comprenant en outre une étape consistant à percer le produit semi-fini sec avant l'étape de maturation.

10. Procédé selon la revendication 5, dans lequel :
- le premier égouttage est effectué à une température comprise entre 2 °C et 3 °C ;
- le second égouttage est effectué à une température comprise entre 18 °C et 22 °C pendant une durée comprise entre 8 et 10 heures après avoir incorporé dans le caille obtenu à partir du premier égouttage une quantité du petit-lait comprise entre 1 % et 5 % en poids du poids du caille ;
- l'étape de maturation se produit pendant 50-60 jours à une température comprise entre 3 °C et 5 °C,
le procédé comprenant en outre une étape consistant à enrober la surface extérieure du produit semi-fini sec avec du charbon végétal en poudre et une étape ultérieure consistant à percer le produit semi-fini sec avant l'étape de maturation.

11. Procédé selon la revendication 5, dans lequel :
- le second égouttage est effectué à une température comprise entre 2 °C et 3 °C pendant une durée comprise entre 24 et 36 heures en appliquant sur le caille une pression comprise entre 940 et 1300 Pa pendant 12 heures ;
- l'étape de maturation se produit pendant 4-6 mois à une température comprise entre 2 °C et 3 °C.

12. Procédé selon la revendication 11, comprenant une étape consistant à ajouter du curcuma et/ou du safran dans l'étape a) de production du lait non laitier.

13. Procédé selon l'une quelconque des revendications 1 à 5 comprenant, après l'étape g), une étape h) consistant à amener et à maintenir le produit semi-fini mature à une température comprise entre 2 °C et 5 °C, de préférence à 2-3 °C, pendant une durée de 1-2 jours à une humidité relative comprise entre 85 % et 90 %.
